# EUROPEAN PATENT SPECIFICATION

(11) **EP 3 998 433 B1**
(45) Date of publication and mention of the grant of the patent: **05.11.2025**
(21) Application number: 20841519.0
(22) Date of filing: 01.07.2020
(51) Int. Cl.: F24H 9/00, F28D 1/06, F28D 7/02, F28D 7/10, F24H 1/20, F24D 17/02, F24H 9/1809, F28D 1/02, F28D 1/047, F28D 20/00

(54) **STORAGE TANK UNIT**
SPEICHERTANKEINHEIT
UNITÉ RÉSERVOIR DE STOCKAGE

(30) Priority: 16.07.2019 JP 2019131297
(43) Date of publication of application: 18.05.2022
(73) Proprietor: Daikin Industries, Ltd., Osaka-shi, Osaka 530-0001 (JP)
(72) Inventor: GOTOU Yurika, Osaka-shi, Osaka 530-8323 (JP); OKAMOTO Atsushi, Osaka-shi, Osaka 530-8323 (JP); OKAMOTO Masakazu, Osaka-shi, Osaka 530-8323 (JP); KOUNO Yasuhiro, Osaka-shi, Osaka 530-8323 (JP); FANG Qi, Osaka-shi, Osaka 530-8323 (JP); OHNO Masao, Osaka-shi, Osaka 530-8323 (JP)
(74) Representative: Hoffmann Eitle
(86) International application number: PCT/JP2020/025893
(87) International publication number: WO 2021/010168

(56) References cited:
- WO-A1-2012/152313
- CN-A- 103 836 795
- JP-A- 2006 250 523
- JP-A- H0 798 156
- JP-A- S5 144 340
- JP-U- H02 140 259
- JP-U- S 568 245
- JP-U- S5 665 354
- JP-U- S56 144 978
- US-A- 1 437 540
- US-A- 2 071 624
- US-A- 2 933 885

## Description

### TECHNICAL FIELD

The present disclosure relates to a storage tank unit.

### BACKGROUND ART

A storage tank unit having a storage tank for storing water and a heat exchanger provided inside the storage tank has been known. For example, Patent Document 1 discloses a storage tank including a heat exchanger formed in a helical shape and baffle plates. Water around the heat exchanger is heated, thereby occurring convection of water in the storage tank. The baffle plates provided inside the heat exchanger promote the convection of water.

### CITATION LIST

### PATENT DOCUMENT

Patent Document 1: EP 0633995 B1
US 1 437 540 A discloses features falling under the preamble of claim 1. WO 2012/152313 A1, US 2 071 624 A, and US 2 933 885 A are further prior art.

### SUMMARY

### TECHNICAL PROBLEM

When a user wants to supply hot water from a storage tank to a target object, such as a bathtub, the storage tank is required to be able to efficiently raise the temperature of water in the tank.

An object of the present disclosure is to provide a storage tank unit capable of efficiently raising the temperature of fluid in a storage tank.

### SOLUTION TO THE PROBLEM

The invention is defined by claim 1.

A first aspect of the present disclosure is directed to a storage tank unit including: a storage tank (51) configured to store fluid; and a first partition member (81a) arranged in the storage tank (51) and extends along a sidewall (56) of the storage tank (51); and a second partition member (81b) arranged inside the first partition member (81a) and extends along the sidewall (56) of the storage tank (51). The first partition member (81a) and the second partition member (81b) are arranged away from a bottom surface of the storage tank (51), and a first channel (43) having an annular horizontal cross section is formed between the first partition member (81a) and the second partition member (81b). A second channel (44) having an annular horizontal cross section is formed between the first partition member (81a) and an inner surface of the sidewall (56) of the storage tank (51). The storage tank unit further includes a heater (52a, 52b, 52d, 52e) configured to heat the fluid in the first channel (43).

In the first aspect, the heater (52a, 52b, 52d, 52e) heats the fluid in the first channel (43) in the storage tank (51). Then, an upward flow of the fluid is created in the first channel (43). The first channel (43) extends along the sidewall (56) of the storage tank (51). This can accelerate the upward flow in the first channel (43), promoting heat transfer from the heater (51a, 52b, 52d, 52e) to the fluid. The first partition member (81a) and the second partition member (81b) are arranged away from the bottom surface of the storage tank (51). This creates, in the second channel (44), a downward flow of the fluid that goes into the first channel (43) from a lower end of the second channel (44). The second channel (44) is formed outside the first channel (43). Thus, the downward flow in the second channel (44) can be kept from disturbing the upward flow in the first channel (43). This can accelerate the upward flow in the first channel (43). The first partition member (81a) may have a gap that allows the fluid to flow in and out of the first partition member (81a). The second partition member (81b) may have a gap that allows the fluid to flow in and out of the second partition member (81b).

A second aspect of the present disclosure is an embodiment of the first aspect. In the second aspect, which forms part of the claimed invention, the heater (52a, 52b, 52d, 52e) is a heat exchanger (52a, 52b) having a helical heat transfer tube (53), and at least one of the first partition member (81a) or the second partition member (81b) serves as the heat exchanger (52a, 52b).

In the second aspect, the first channel (43) is formed between the first partition member (81a) and the second partition member (81b). The partition member (81a, 81b) serving as the heat exchanger (52a, 52b) by itself can heat the fluid while rectifying the fluid from the lower end to upper end of the first channel (43). This can accelerate the upward flow in the first channel (43), promoting heat transfer from the heat exchanger (52a, 52b) to the fluid.

A third aspect of the present disclosure, which forms part of the claimed invention, is an embodiment of the second aspect. In the third aspect, each of the first partition member (81a) and the second partition member (81b) serves as the heat exchanger (52a, 52b) having the helical heat transfer tube (53).

In the third aspect, the first partition member (81a) and the second partition member (81b), which are the heat exchangers (52a, 52b), heat the fluid in the first channel (43). This can efficiently raise the temperature of the fluid in the first channel (43).

A fourth aspect of the present disclosure is an embodiment of the second or third aspect. In the fourth aspect, the heat transfer tube (53) includes a plurality of heat transfer portions (57, 57) vertically adjacent to each other, and a first distance (D1) between a vertically adjacent pair of the heat transfer portions (57, 57) is shorter than a second distance (D2) in a radial direction between the first partition member (81a) and the second partition member (81b).

In the fourth aspect, the fluid can be kept from flowing between the vertically adjacent heat transfer portions (57, 57). This can reduce a decrease in speed of the upward flow of the fluid.

A fifth aspect of the present disclosure is an embodiment of the first aspect. In the fifth aspect, the first partition member (81a) is a first partition (82a) having a substantially cylindrical shape arranged on an outer peripheral side of the first channel (43), the second partition member (81b) is a second partition (82b) having a substantially cylindrical shape arranged on an inner peripheral side of the first channel (43), and the heater (52a, 52b, 52d, 52e) is a heat exchanger (52d, 52e) that is arranged between the first partition (82a) and the second partition (82b) and has a helical heat transfer tube (53) formed along the first partition (82a) and the second partition (82b).

In the fifth aspect, the first channel (43) is a space surrounded by the first partition (82a) and the second partition (82b). The heat exchangers (52d, 52e) are arranged in the first channel (43). This configuration can heat the upward flow in the first channel (43) while rectifying the flow. This can accelerate the upward flow in the first channel (43), promoting heat transfer from the heat exchangers (52d, 52e) to the fluid.

A sixth aspect of the present disclosure is an embodiment of the fifth aspect. In the sixth aspect, the heat transfer tube (53) includes a plurality of heat transfer portions (57, 57) vertically adjacent to each other, and a first distance (D1) between a vertically adjacent pair of the heat transfer portions (57, 57) is shorter than a third distance (D3) in a radial direction between the first partition (82a) and the heat transfer tube (53) and a fourth distance (D4) in a radial direction between the second partition (82b) and the heat transfer tube (53).

In the sixth aspect, the upward flow in the first channel (43) can be kept from flowing between the vertically adjacent heat transfer portions (57, 57). This can reduce a decrease in speed of the upward flow of the fluid.

A seventh aspect of the present disclosure is an embodiment of the second, third, or fifth aspect. In the seventh aspect, the heat transfer tube (53) includes a plurality of heat transfer portions (57, 57) vertically adjacent to each other, and the vertically adjacent heat transfer portions (57, 57) are in contact with each other.

In the seventh aspect, the upward flow in the first channel (43) can be prohibited from flowing between the vertically adjacent heat transfer portions (57, 57). This can reduce a decrease in speed of the upward flow of the fluid.

An eighth aspect of the present disclosure is an embodiment of any one of the second to seventh aspects. In the eighth aspect, an inflow port (59) of the heat transfer tube (53) is formed at an upper end of the heat transfer tube (53), and an outflow port (60) of the heat transfer tube (53) is formed at a lower end of the heat transfer tube (53).

In the eighth aspect, a heating medium flowing through the heat transfer tube (53) and the fluid flowing through the first channel (43) substantially flow in opposite directions. This can efficiently raise the temperature of the fluid in the first channel (43).

A ninth aspect of the present disclosure is an embodiment of any one of the second to eighth aspects. In the ninth aspect, in a cross section perpendicular to an axis of the heat transfer tube (53), a vertical length (H) from a lower end to upper end of the heat transfer tube (53) is greater than a horizontal length (W) between both lateral ends of the heat transfer tube (53).

In the ninth aspect, a contact area between the fluid ascending in the first channel (43) and the heat transfer tube (53) increases, promoting heat transfer from the heat transfer tube (53) to the fluid.

A tenth aspect of the present disclosure is an embodiment of any one of the first to seventh aspects. In the tenth aspect, the storage tank unit further includes a rectifier (71) arranged above the first channel (43) and configured to guide the fluid ascending in the first channel (43) toward the center of the storage tank (51).

In the tenth aspect, the rectifier can keep the upward flow generated in the first channel (43) and the downward flow passing near the sidewall (56) of the storage tank (51) from colliding with each other.

An eleventh aspect of the present disclosure is an embodiment of any one of the first to tenth aspects. In the eleventh aspect, the first partition member (81a), the second partition member (81b), and the heater (52a, 52b, 52d, 52e) are provided only in a bottom portion of the storage tank (51).

In the eleventh aspect, a space for the fluid flowing by convection can be secured in an upper portion of the storage tank (51).

A twelfth aspect of the present disclosure is directed to a hot water supply apparatus (20) including a storage tank unit configured to store water. The storage tank unit is the storage tank unit (50) of any one of the first to eleventh aspects.

### BRIEF DESCRIPTION OF THE DRAWINGS

FIG. 1 is a piping system diagram illustrating an overall configuration of a storage tank unit according to an embodiment.
FIG. 2 is a view illustrating a cross section of part of a heat transfer tube perpendicular to an axis of the heat transfer tube.
FIG. 3 is a schematic view illustrating a flow of a fluid heated by a heat exchanger in a storage tank.
FIG. 4 corresponds to FIG. 3, and illustrates a first variation of the embodiment.
FIG. 5 corresponds to FIG. 3, and illustrates a second variation of the embodiment.
FIG. 6 corresponds to FIG. 3, and illustrates a third variation of the embodiment.
FIG. 7 corresponds to FIG. 3, and illustrates a fourth variation of the embodiment.
FIG. 8 corresponds to FIG. 3, and illustrates a fifth variation of the embodiment.
FIG. 9 corresponds to FIG. 2, and illustrates another embodiment different from the embodiment.
FIG. 10 corresponds to FIG. 2, and illustrates another embodiment different from the embodiment.

### DESCRIPTION OF EMBODIMENTS

### «Embodiment»

A hot water supply apparatus (20) of the present disclosure is applied to a heat pump hot water supply unit (1). The hot water supply unit (1) heats water supplied from a water source (S) and stores the heated water in a storage tank (51). The heated water in the storage tank (51) is supplied to a predetermined hot water supply target (T). The water source (S) is a line through which water is supplied, and includes a water supply system. The hot water supply target (T) is a target where the heated water is used, and includes a shower, a faucet, and a bathtub.

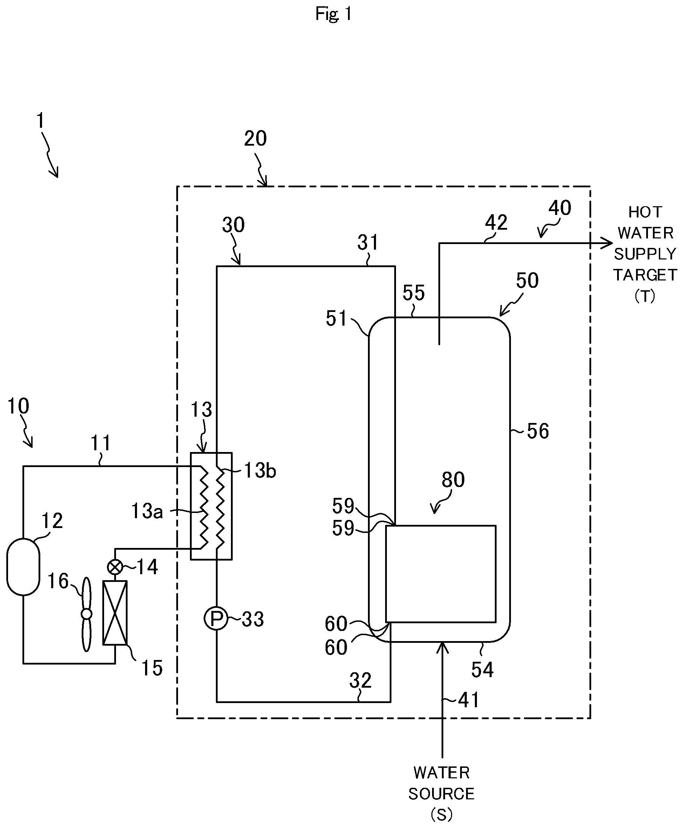

As illustrated in FIG. 1, the hot water supply unit (1) includes a heat source apparatus (10) and the hot water supply apparatus (20). The heat source apparatus (10) includes a refrigerant circuit (11). The hot water supply apparatus (20) has a heating channel (30) and a hot water supply channel (40). The heating channel (30) is a channel through which water as a heating medium flows. The hot water supply channel (40) is a water channel formed between the water source (S) and the hot water supply target (T). The hot water supply unit (1) includes a water heat exchanger (13). The refrigerant circuit (11) and the heating channel (30) are connected to each other via the water heat exchanger (13).

### <Heat Source Apparatus>

The heat source apparatus (10) is a heat source for producing heated water. The refrigerant circuit (11) of the heat source apparatus (10) is filled with a refrigerant. Examples of the refrigerant to be used include a fluorocarbon refrigerant and a natural refrigerant, such as propane. The refrigerant circulates in the refrigerant circuit (11), whereby a vapor compression refrigeration cycle is performed.

The refrigerant circuit (11) includes a compressor (12), the water heat exchanger (13), an expansion valve (14), and an air heat exchanger (15).

The compressor (12) sucks and compresses a low-pressure refrigerant. The compressor (12) discharges the refrigerant compressed to high pressure.

The water heat exchanger (13) heats water in the heating channel (30). The water heat exchanger (13) has a refrigerant channel (13a) and a water channel (13b). The water heat exchanger (13) enables heat exchange between the refrigerant flowing through the refrigerant channel (13a) and water as a heating medium flowing through the water channel (13b). The water heat exchanger (13) constitutes a radiator (condenser) that allows the refrigerant to dissipate heat.

The expansion valve (14) constitutes a decompression mechanism that decompresses the refrigerant. The expansion valve (14) decompresses the high-pressure refrigerant to low pressure. The expansion valve (14) is constituted of an electronic expansion valve, for example.

The air heat exchanger (15) enables heat exchange between the air and the refrigerant. The air heat exchanger (15) is placed outside a room. An outdoor fan (16) is installed near the air heat exchanger (15). The air transferred by the outdoor fan (16) passes through the air heat exchanger (15). In the air heat exchanger (15), the refrigerant absorbs heat from outdoor air and evaporates. The air heat exchanger (15) constitutes an evaporator.

### <Hot Water Supply Apparatus>

The hot water supply apparatus (20) includes the heating channel (30), the hot water supply channel (40), and a storage tank unit (50).

### <Heating Channel>

The heating channel (30) has the water heat exchanger (13), the storage tank unit (50), an inflow pipe (31), an outflow pipe (32), and a pump (33).

The storage tank unit (50) includes the storage tank (51), a first partition member (81a), a second partition member (81b), and heaters (52a, 52b). The storage tank (51) stores water which is fluid. The first partition member (81a) is arranged inside the storage tank (51). The first partition member (81a) is formed in a cylindrical shape extending along a sidewall (56) of the storage tank (51). The second partition member (81b) is arranged inside the first partition member (81a). The second partition member (81b) is formed in a cylindrical shape extending along the sidewall (56) of the storage tank (51). A first channel (43) having an annular horizontal cross section is formed between the first partition member (81a) and the second partition member (81b). The heaters (52a, 52b) heat water in the storage tank (51) in the first channel (43).

The outflow pipe (32) is a pipe that sends water that has released heat in the storage tank (51) from the heat transfer tube (53) into the water heat exchanger (13). An inlet end of the outflow pipe (32) is connected to an outlet end of the heat transfer tube (53). An outlet end of the outflow pipe (32) is connected to an inlet end of the water channel (13b) of the water heat exchanger.

The water heat exchanger (13) includes the water channel (13b). The refrigerant heats water flowing into the water heat exchanger (13) from the outflow pipe (32).

The inflow pipe (31) is a pipe that sends water heated by the water heat exchanger (13) to the storage tank (51). An inlet end of the inflow pipe (31) is connected to an outlet end of the water channel (13b). An outlet end of the inflow pipe (31) is connected to an inlet end of the heat transfer tube (53) in the storage tank (51).

The pump (33) is a conveyer that conveys water in the heating channel (30). The pump (33) is provided in the outflow pipe (32).

### <Hot Water Supply Channel>

The hot water supply channel (40) includes a water supply pipe (41) and a hot water supply pipe (42).

The water supply pipe (41) is an inflow channel that allows the water source (S) and the storage tank (51) to communicate with each other. An upstream end of the water supply pipe (41) is connected to, for example, a pipe of a water supply system. A downstream end of the water supply pipe (41) is connected to a bottom (54) of the storage tank (51). The water supply pipe (41) supplies low-temperature water from the water source (S) to the storage tank (51) as appropriate. Specifically, the internal pressure of the storage tank (51) decreases when water in the storage tank (51) is supplied to the hot water supply target (T). The decrease in internal pressure brings a pressure difference between the water source (S) and the storage tank (51), and the storage tank (51) is replenished with low-temperature water from the water source (S) through the water supply pipe (41).

The hot water supply pipe (42) is an outflow channel that allows the storage tank (51) and the hot water supply target (T) to communicate with each other. An upstream end of the hot water supply pipe (42) is connected to a top (55) of the storage tank (51).

Water that has entered the storage tank (51) from the water supply pipe (41) is heated in the storage tank (51) and flows into the hot water supply pipe (42). The water in the hot water supply pipe (42) passes through the hot water supply pipe (42) and is supplied to the hot water supply target (T).

### -Storage Tank Unit-

The storage tank unit (50) includes the storage tank (51), the first partition member (81a), the second partition member (81b), and the heaters (52a, 52b). In the present embodiment, the first partition member (81a) and the second partition member (81b) respectively serve as the heaters (52a, 52b). The heaters (52a, 52b) are heat exchangers (52a, 52b) each having a helical heat transfer tube (53).

### <Storage Tank>

The storage tank (51) is formed in a vertically long cylindrical shape. The storage tank (51) has a cylindrical sidewall (56), a bottom (54) that closes a lower end of the sidewall (56), and a top (55) that closes an upper end of the sidewall (56). The storage tank (51) stores water which is fluid.

### <Heat Exchanger>

The first partition member (81a) serves as a first heat exchanger (52a). The heat transfer tube (53) of the first heat exchanger (52a) is formed into a substantially tubular shape. Specifically, the heat transfer tube (53) of the first heat exchanger (52a) is formed in a helical shape along an inner peripheral surface of the storage tank (51).

The second partition member (81b) serves as a second heat exchanger (52b). The heat transfer tube (53) of the second heat exchanger (52b) is formed into a substantially tubular shape. Specifically, the heat transfer tube (53) of the second heat exchanger (52b) is formed in a helical shape and arranged inside the first heat exchanger (52a). A center axis of the heat transfer tube (53) of the first heat exchanger (52a) coincides with a center axis of the heat transfer tube (53) of the second heat exchanger (52b).

Both of the heat exchangers (52a, 52b) are arranged only in a bottom portion of the storage tank (51). The heat exchangers (52a, 52b) are arranged away from a bottom surface of the storage tank (51).

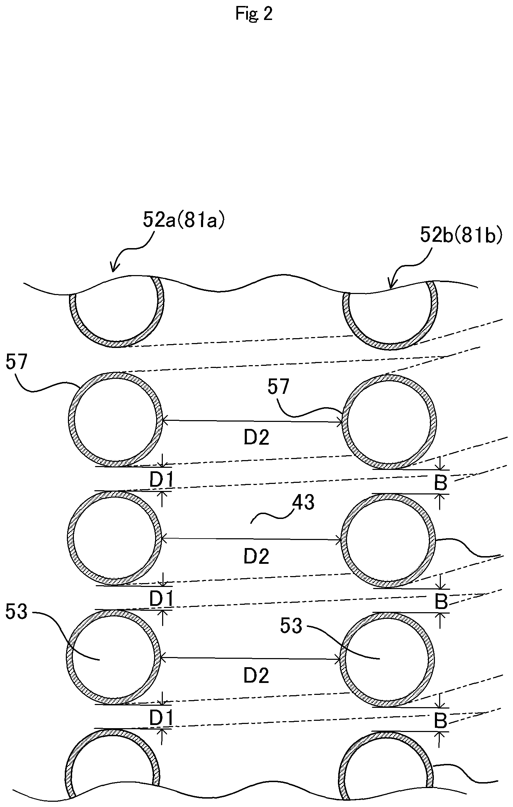

As illustrated in FIG. 2, each heat transfer tube (53) includes a plurality of heat transfer portions (57, 57) vertically adjacent to each other. Each of the heat transfer portions (57) corresponds to a single turn of the heat transfer tube (53). A gap is formed between a vertically adjacent pair of the heat transfer portions (57, 57). Water as fluid flows through this gap. The heat transfer tube (53) urges water to flow in the vertical direction in a first channel (43) and a second channel (44) which will be described later. Specifically, a distance between a vertically adjacent pair of the heat transfer portions (57, 57) will be referred to as a first distance (D1). A radial distance between the first heat exchanger (52a) and the second heat exchanger (52b) will be referred to as a second distance (D2). The second distance (D2) is a radial distance between an inner peripheral end of the heat transfer tube (53) of the first heat exchanger (52a) and an outer peripheral end of the heat transfer tube (53) of the second heat exchanger (52b). The first distance (D1) is shorter than the second distance (D2).

The heat transfer tube (53) of the first heat exchanger (52a) and the heat transfer tube (53) of the second heat exchanger (52b) respectively have inflow ports (59, 59) into which the heating medium flows. Each inflow port (59) is located at an upper end of the corresponding heat transfer tube (53). The inflow port (59) of the first heat exchanger (52a) and the inflow port (59) of the second heat exchanger (52b) are connected to an outlet end of the inflow pipe (31).

The heat transfer tube (53) of the first heat exchanger (52a) and the heat transfer tube (53) of the second heat exchanger (52b) respectively have outflow ports (60, 60) from which the heating medium flows out. Each outflow port (60) is located at a lower end of the corresponding heat transfer tube (53). The outflow port (60) of the first heat exchanger (52a) and the outflow port (60) of the second heat exchanger (52b) are connected to an outlet end of the outflow pipe (32).

### <First Channel, Second Channel, and Surrounding Space>

A first channel (43) is formed between the first heat exchanger (52a) and the second heat exchanger (52b). The first channel (43) is a channel of fluid. Specifically, the first channel (43) is formed between an inner peripheral surface of the first heat exchanger (52a) and an outer peripheral surface of the second heat exchanger (52b). The first channel (43) extends along the sidewall of the storage tank (51). The first channel (43) has an annular horizontal cross section.

A second channel (44) is formed between the first heat exchanger (52a) and an inner surface of the sidewall (56) of the storage tank (51). The second channel (44) is a channel of fluid. Specifically, the second channel (44) is formed between an outer peripheral surface of the first heat exchanger (52a) and an inner peripheral surface of the sidewall (56) of the storage tank (51). The second channel (44) extends along the sidewall of the storage tank (51). The second channel (44) has an annular horizontal cross section.

A space surrounded by the heat transfer tube (53) of the second heat exchanger (52b) serves as an internal space (45). A bottom space (46) is formed between the heat exchangers (52a, 52b) and the bottom surface of the storage tank (51). An upper space (47) is formed above the two heat exchangers (52a, 52b).

### -Operation-

The hot water supply unit (1) performs a heating operation for heating water in the storage tank (51) and a hot water supply operation for supplying the heated water in the storage tank (51) to the hot water supply target (T).

In the heating operation, the heat source apparatus (10) shown in FIG. 1 operates, and the pump (33) is turned on. When the heat source apparatus (10) is operating during the heating operation, the compressor (12) is driven, and the opening degree of the expansion valve (14) is adjusted.

A refrigeration cycle is performed in the refrigerant circuit (11). Specifically, the refrigerant compressed in the compressor (12) flows through the refrigerant channel (13a) of the water heat exchanger (13). In the water heat exchanger (13), water in the refrigerant channel (13a) dissipates heat to water in the water channel (13b). As a result, the refrigerant in the refrigerant channel (13a) condenses. The refrigerant that has dissipated heat in the water heat exchanger (13) is decompressed by the expansion valve (14), and then flows through the air heat exchanger (15). In the air heat exchanger (15), the refrigerant evaporates in the air heat exchanger (15). The evaporated refrigerant is sucked into the compressor (12).

Water in the water channel (13b) heated by the water heat exchanger (13) flows through the inflow pipe (31) and enters the inflow ports (59) of the first heat exchanger (52a) and the second heat exchanger (52b). Water that has entered the inflow ports (59) flows into the first heat exchanger (52a) and the second heat exchanger (52b), and passes through the heat transfer tubes (53). Thereafter, water flows into the outflow pipe (32) through the outflow ports (60). Water in the outflow pipe (32) flows into the water heat exchanger (13) again, and is heated in the water channel (13b) by the refrigerant channel (13a).

**In** the hot water supply operation, water in the storage tank (51) is supplied to the hot water supply target (T). When the amount of water in the storage tank (51) decreases, water is supplied from the water source (S) into the storage tank (51).

Water supplied to the storage tank (51) lowers the temperature of water in the storage tank (51). Thus, the heating operation is performed to heat the water in the storage tank (51).

### -Flow of Water in Storage Tank-

The flow of water as fluid in the storage tank (51) will be described below.

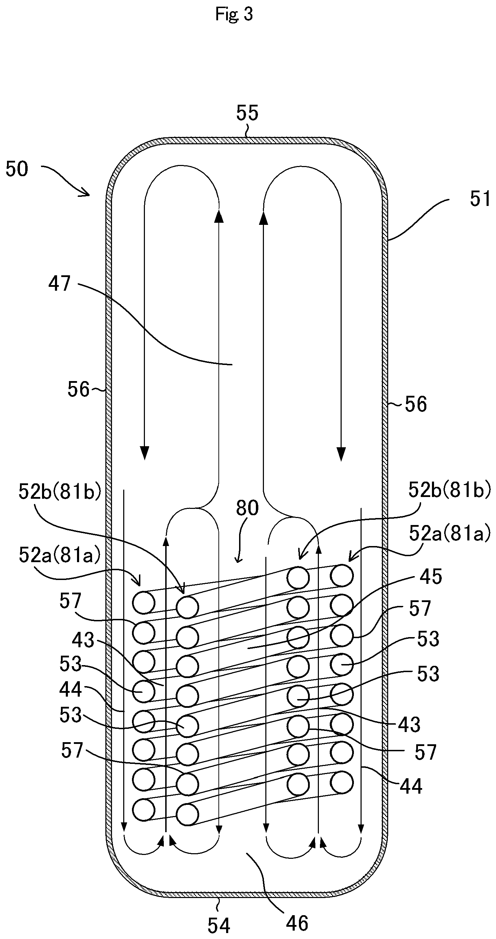

As illustrated in FIG. 3, the first heat exchanger (52a) and the second heat exchanger (52b) heat the fluid in the first channel (43). As a result, an upward flow of the fluid is created in the first channel (43).

**In** the second channel (44), heat dissipation from the sidewall (56) of the storage tank (51) keeps the temperature of the fluid from rising. Thus, the upward flow in the first channel (43) draws the fluid in the second channel (44) into the first channel (43) through the bottom space (46). This creates a downward flow of the fluid in the second channel (44). The upward flow in the first channel (43) goes to the upper space (47) of the storage tank (51). Thereafter, the upward flow goes down from the top (55) to become a downward flow. This downward flow merges with the downward flow in the second channel (44).

The fluid closer to the center of the internal space (45) has a lower temperature than the fluid in the first channel (43). Thus, the upward flow in the first channel (43) partially goes toward the center of the second heat exchanger (52b). Thereafter, this partial flow goes downward, and enters the bottom space (46). The fluid in the bottom space (46) flows into the first channel (43). The fluid is reheated in the first channel (43) and flows upward.

In this way, natural convection occurs in the storage tank (51).

### -Advantages of Embodiment-

According to the embodiment, the hot water supply apparatus (20) includes the storage tank (51) configured to store fluid, the first partition member (81a) arranged in the storage tank (51) and extends along the sidewall (56) of the storage tank (51), and the second partition member (81b) arranged inside the first partition member (81a) and extends along the sidewall (56) of the storage tank (51). The first partition member (81a) and the second partition member (81b) are arranged away from the bottom surface of the storage tank (51), and the first channel (43) having an annular horizontal cross section is formed between the first partition member (81a) and the second partition member (81b). The second channel (44) having an annular horizontal cross section is formed between the first partition member (81a) and the inner surface of the sidewall (56) of the storage tank (51). The storage tank unit further includes the heater (52a, 52b, 52d, 52e) configured to heat the fluid in the first channel (43).

The heater (52a, 52b) heats the fluid in the first channel (43). Thus, the fluid in the first channel (43) rises in temperature to form an upward flow, decreasing the pressure in a lower portion of the first channel. The fluid in the second channel (44), the internal space (45), and the bottom space (46) is drawn into the first channel (43) from the lower end of the first channel (43). Thus, in the present embodiment, natural convection can be promoted using the so-called chimney effect caused by the upward flow in the first channel (43). This can promote heat transfer from the heaters (52a, 52b) to the fluid.

The first channel (43) has an annular horizontal cross section. Thus, the first channel (43) can have a smaller cross-sectional flow area than, for example, a channel having a round horizontal cross section. This can accelerate the upward flow in the first channel (43).

The second channel (44) is formed outside the first channel (43), and the downward flow goes through the second channel (44). Thus, the downward flow in the second channel (44) can be kept from disturbing the upward flow in the first channel (43). This can further accelerate the upward flow in the first channel (43).

The natural convection in the storage tank (51) can be promoted with the increase in speed of the upward flow in the first channel (43). This can quickly equalize the temperature of the fluid in the storage tank (51). Thus, no additional device such as a stirrer is required. This can facilitate the operation of the hot water supply apparatus (20) and can reduce the manufacturing cost.

In the embodiment, the first partition member (81a) and the second partition member (81b) serve as the heat exchangers (52a, 52b) each having a helical heat transfer tube (53).

The fluid in the first channel (43) is heated from the lower end to upper end of the first channel (43). The first heat exchanger (52a) and the second heat exchanger (52b) heat the fluid in the first channel (43) from the inner and outer peripheral sides of the first channel (43). This can heat the upward flow in the first channel (43) while rectifying the flow, and can accelerate the upward flow in the first channel (43). As a result, heat transfer from the heat exchangers (52a, 52b) to the fluid can be promoted.

In the embodiment, the heat transfer tube (53) includes a plurality of vertically adjacent heat transfer portions (57, 57). A first distance (D1) between a vertically adjacent pair of the heat transfer portions (57, 57) is shorter than a second distance (D2) in a radial direction between the heat transfer tube (53) of the first heat exchanger (52a) and the heat transfer tube (53) of the second heat exchanger (52b).

This configuration can keep the fluid forming the upward flow in the first channel (43) from flowing between the vertically adjacent heat transfer portions (57, 57). This can reduce a decrease in speed of the upward flow of the fluid, and can efficiently raise the temperature of the fluid in the first channel (43).

The natural convection of the fluid can be promoted with the increase in speed of the upward flow in the first channel (43).

The first distance (D1), which is made short, can downsize the heat exchangers (52a, 52b) in the vertical direction. This can increase the volume of the upper space of the storage tank (51), and can promote the natural convection in the upper space (47).

Further, the helical heat transfer tube (53) can have more turns. Specifically, the number of the heat transfer portions (57) can be increased. This increases a contact area between the fluid in the first channel (43) and the heat transfer tube (53). As a result, heat exchange from the heat transfer tube (53) to the fluid can be promoted.

In the embodiment, the inflow port (59) of each heat transfer tube (53) is formed at the upper end of the heat transfer tube (53), and the outflow port (60) of each heat transfer tube (53) is formed at the lower end of the heat transfer tube (53).

Specifically, the heating medium heated by the water heat exchanger (13) passes through the inflow pipe (31), and enters the inflow port (59) of the first heat exchanger (52a) and the inflow port (59) of the second heat exchanger (52b). The heating medium flows downward in the heat transfer tubes (53) of the first heat exchanger (52a) and the second heat exchanger (52b), and goes into the outflow pipe (32) from the outflow ports (60, 60) at the lower ends of the heat transfer tubes (53, 53). That is, the heating medium flows from the upper end to lower end of each heat transfer tube (53). Thus, the heating medium in the first channel (43) flows substantially opposite to the upward flow of the heated fluid. This can efficiently raise the temperature of the fluid in the first channel (43).

In the present embodiment, the first partition member (81a), the second partition member (81b), and the heaters (52a, 52b) are provided only in a bottom portion of the storage tank (51).

Thus, a space for the fluid forming the upward flow by the effect of the heat transfer tube (53) can be secured in the upper portion of the storage tank (51). Specifically, the upward flow in the first channel (43) goes to the upper space (47). Thereafter, the fluid goes down from the top (55) to form a downward flow. This downward flow goes to the second channel (44). This can promote natural convection of the fluid.

### -Variations of Embodiment-

### <First Variation>

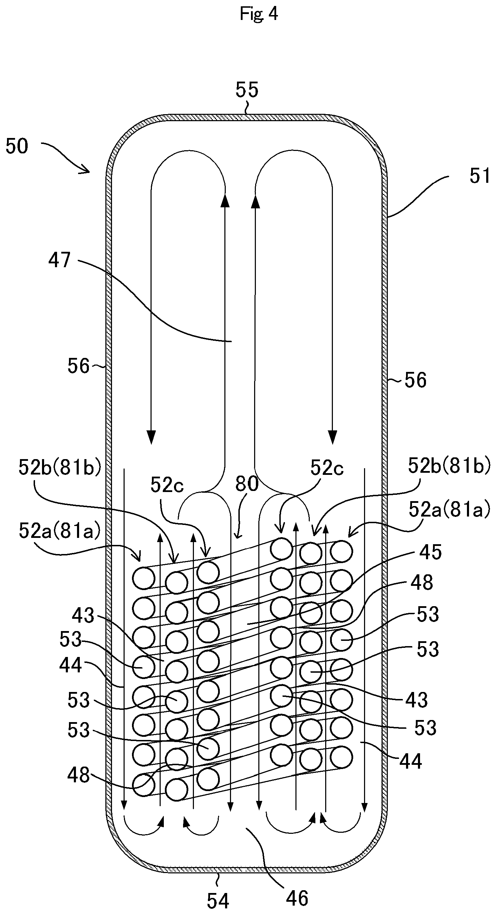

As illustrated in FIG. 4, a storage tank (51) according to a first variation of the present embodiment includes a third heat exchanger (52c).

The third heat exchanger (52c) has a heat transfer tube (53). The third heat exchanger (52c) is arranged inside the second heat exchanger (52b). That is, three rows of heat transfer tubes (53, 53, 53) are provided in the storage tank (51).

A radial distance between an outer peripheral end of the heat transfer tube (53) of the third heat exchanger (52c) and an inner peripheral end of the heat transfer tube (53) of the second heat exchanger (52b) is the same as the second distance (D2). A third channel (48) is formed between the third heat exchanger (52c) and the second heat exchanger (52b).

The first heat exchanger (52a) and the second heat exchanger (52b) heat the fluid in the first channel (43). The second heat exchanger (52b) and the third heat exchanger (52c) heat the fluid in the third channel (48). Thus, an upward flow of the fluid is created in the first channel (43) and the third channel (48).

In the first variation, multiple rows of the heat transfer tubes (53, 53, 53) can downsize the heat exchangers (52a, 52b, 52c) in the vertical direction. This can increase the volume of the upper space (47) of the storage tank (51), and can promote the natural convection in the upper space (47).

Each of the first channel (43) and the third channel (48) has an annular horizontal cross section. Each of the first channel (43) and the third channel (48) has a relatively small cross-sectional flow area. This can accelerate the upward flow.

Further, the downward flow in the second channel (44) and the internal space (45) can be accelerated with the increase in amount and speed of the upward flow in the first channel (43) and the third channel (48). This can promote convection of the fluid.

### <Second Variation>

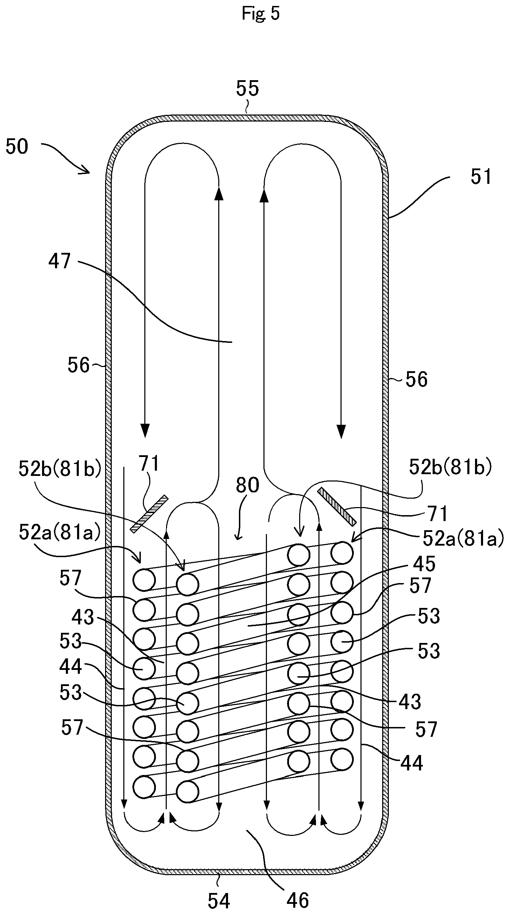

As illustrated in FIG. 5, a storage tank (51) according to a second variation of the present embodiment includes a rectifier (71).

The rectifier (71) is fixed in the storage tank (51) above the heat transfer tube (53) of the first heat exchanger (52a). The rectifier (71) guides the fluid ascending in the first channel (43) toward the center of the storage tank (51). Specifically, the rectifier (71) is a plate member formed into a cylindrical truncated cone shape with an open top and an open bottom. The rectifier (71) is arranged to be inclined upward from the vicinity of the upper end of the heat transfer tube (53) of the first heat exchanger (52a) as it goes radially inward of the storage tank (51). The rectifier (71) has an opening whose center coincides with the center axis of the heat transfer tube (53).

According to the second variation, the upward flow in the first channel (43) and the downward flow from the upper space (47) can be kept from colliding with each other near the upper end of the heat transfer tube (53). This can promote natural convection of the fluid.

### <Third Variation>

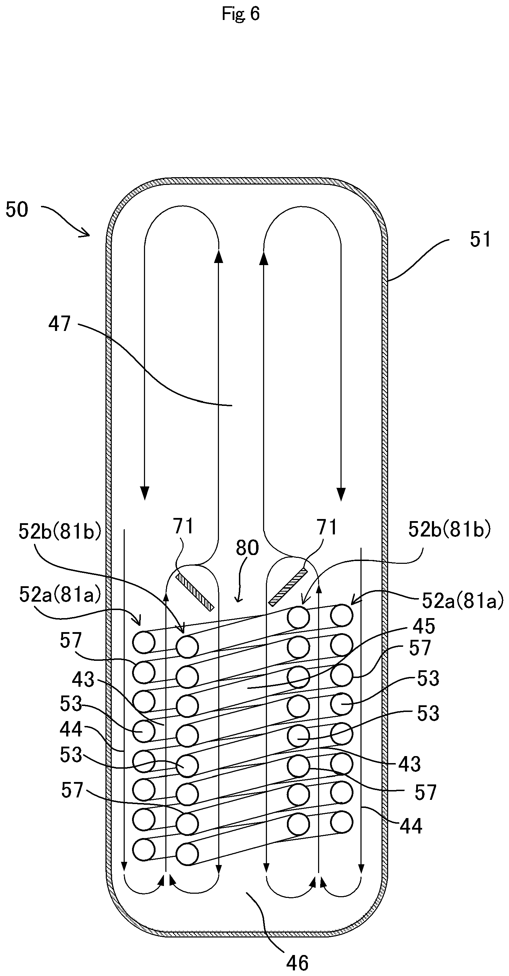

As illustrated in FIG. 6, a storage tank (51) according to a third variation of the present embodiment includes a rectifier (71) different from the rectifier (71) of the second variation.

Specifically, the rectifier (71) is formed into a cylindrical inverted truncated cone shape. The rectifier (71) is inclined downward from above the heat transfer tube (53) of the second heat exchanger (52b) as it goes radially inward of the storage tank (51).

According to the third variation, the upward flow in the first channel (43) and the downward flow coming from the upper space (47) can be kept from colliding with each other near the upper ends of the heat transfer tubes (53). This can promote natural convection of the fluid.

### <Fourth Variation>

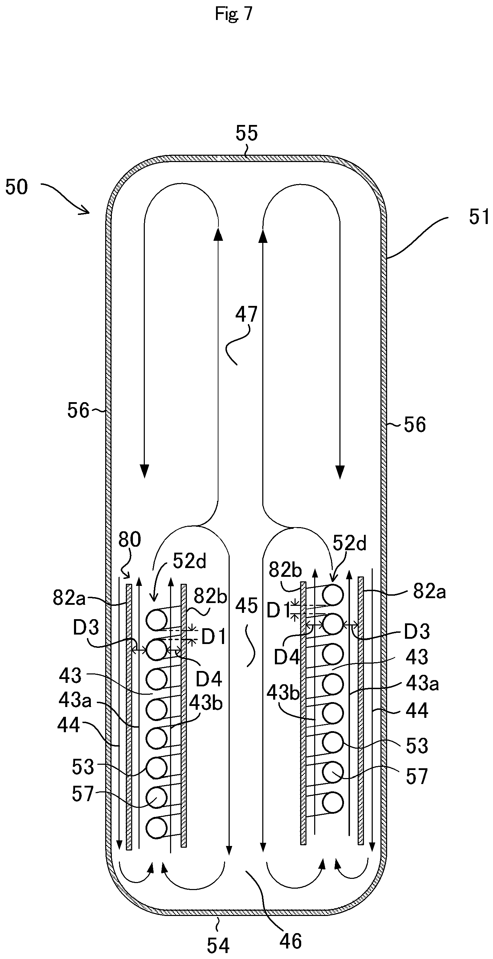

According to a fourth variation, a first partition (82a) in a cylindrical shape serves as the first partition member (81a) as illustrated in FIG. 7. A second partition (82b) in a cylindrical shape serves as the second partition member (81b). A fourth heat exchanger (52d) serves as the heater (52d).

A first channel (43) is formed between the first partition (82a) and the second partition (82b). In other words, the first partition (82a) is arranged on the outer peripheral side of the first channel (43). The second partition (82b) is arranged on the inner peripheral side of the first channel (43).

A second channel (44) is formed between an outer peripheral surface of the first partition (82a) and an inner peripheral surface of the sidewall (56) of the storage tank (51).

The fourth heat exchanger (52d) heats the fluid in the first channel (43). The fourth heat exchanger (52d) is arranged between the first partition (82a) and the second partition (82b). The fourth heat exchanger (52d) has a helical heat transfer tube (53) formed along the first partition (82a) and the second partition (82b).

A radial distance between the first partition (82a) and the heat transfer tube (53) is referred to as a third distance (D3). Specifically, the third distance (D3) is a radial distance between the inner peripheral surface of the first partition (82a) and an outer peripheral end of the heat transfer tube (53) of the fourth heat exchanger (52d). A radial distance between the second partition (82b) and the heat transfer tube (53) is referred to as a fourth distance (D4). Specifically, the fourth distance (D4) is a radial distance between an outer peripheral surface of the second partition (82b) and an inner peripheral end of the heat transfer tube (53) of the fourth heat exchanger (52d). The first distance (D1) between a vertically adjacent pair of heat transfer portions (57, 57) of the fourth heat exchanger (52d) is shorter than the third distance (D3) and the fourth distance (D4).

In the first channel (43), an outer channel (43a) is formed between the first partition (82a) and the fourth heat exchanger (52d), and an inner channel (43b) is formed between the second partition (82b) and the fourth heat exchanger (52d).

When the fluid in the first channel (43) is heated by the fourth heat exchanger (52d), an upward flow of the fluid is formed in the outer channel (43a) and the inner channel (43b). Thus, the pressure decreases in a lower portion of the first channel (43). The fluid in the second channel (44), the internal space (45), and the bottom space (46) is drawn into the first channel (43).

Thus, in the fourth variation, natural convection can be promoted using the chimney effect caused by the upward flow in the outer channel (43a) and inner channel (43b) of the first channel (43). This can promote heat transfer from the fourth heat exchanger (52d) to the fluid.

The first channel (43) includes the outer channel (43a) and the inner channel (43b). Each of the outer channel (43a) and the inner channel (43b) has an annular horizontal cross section. Each of the outer channel (43a) and the inner channel (43b) has a relatively small cross-sectional flow area. This can accelerate the upward flow.

The second channel (44) is formed between the outer peripheral surface of the first partition (82a) and the inner peripheral surface of the sidewall (56) of the storage tank (51), and has an annular horizontal cross section. The second channel (44) is formed outside the first channel (43), and a downward flow of the fluid is formed in the second channel (44). Thus, the downward flow in the second channel (44) can be kept from disturbing the upward flow in the first channel (43). This can further accelerate the upward flow in the first channel (43).

Further, in the first channel (43), the upward flow in the outer channel (43a) and the upward flow in the inner channel (43b) can be kept from flowing between the vertically adjacent heat transfer portions (57, 57). This can reduce a decrease in speed of the upward flow in the outer channel (43a) and the inner channel (43b), and can efficiently raise the temperature of the fluid in the first channel (43).

### <Fifth Variation>

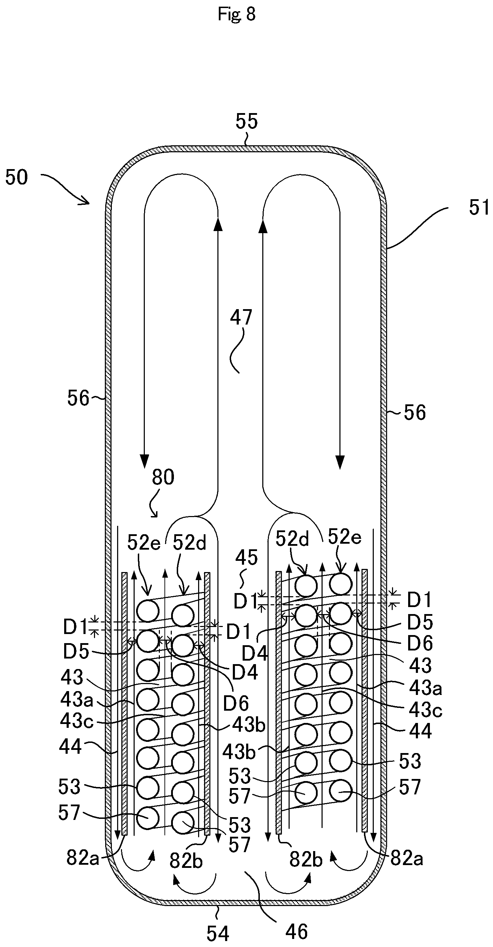

As illustrated in FIG. 8, in a fifth variation of the present embodiment, a fourth heat exchanger (52d) and a fifth heat exchanger (52e) are arranged between the first partition (82a) and second partition (82b) of the fourth variation.

The fifth heat exchanger (52e) is a heater (52e) that heats the fluid in the first channel (43). The fifth heat exchanger (52e) is arranged on the outer peripheral side of the fourth heat exchanger (52d) and on the inner peripheral side of the first partition (82a). The fifth heat exchanger (52e) has a helical heat transfer tube (53) formed along the fourth heat exchanger (52d) and the first partition (82a).

A radial distance between the first partition (82a) and the heat transfer tube (53) of the fifth heat exchanger (52e) is referred to as a fifth distance (D5). Specifically, the fifth distance (D5) is a radial distance between the inner peripheral surface of the first partition (82a) and an outer peripheral end of the heat transfer tube (53) of the fifth heat exchanger (52e). A radial distance between the heat transfer tube (53) of the fourth heat exchanger (52d) and the heat transfer tube (53) of the fifth heat exchanger (52e) is referred to as as a sixth distance (D6). Specifically, the sixth distance (D6) is a radial distance between an outer peripheral end of the heat transfer tube (53) of the fourth heat exchanger (52d) and an outer peripheral end of the heat transfer tube (53) of the fifth heat exchanger (52e). The first distance (D1) between a vertically adjacent pair of heat transfer portions (57, 57) of the fourth heat exchanger (52d) and the fifth heat exchanger (52e) is shorter than the fifth distance (D5) and the sixth distance (D6).

The first channel (43) includes an outer channel (43a) between the first partition (82a) and the fourth heat exchanger (52d), an intermediate channel (43c) between the fourth heat exchanger (52d) and the fifth heat exchanger (52e), and an inner channel (43b) between the second partition (82b) and the fifth heat exchanger (52e).

When the fluid in the first channel (43) is heated by the fourth heat exchanger (52d) and the fifth heat exchanger (52e), an upward flow of the fluid is formed in the outer channel (43a), the intermediate channel (43c), and the inner channel (43b).

Thus, the pressure decreases in a lower portion of the first channel (43). The fluid in the second channel (44), the internal space (45), and the bottom space (46) is drawn into the first channel (43). In the present embodiment described above, natural convection can be promoted using the chimney effect caused by the upward flow in the outer channel (43a), intermediate channel (43c), and inner channel (43b) of the first channel (43). This can promote heat transfer from the fourth heat exchanger (52d) and the fifth heat exchanger (52e) to the fluid.

Thus, according to the fifth variation, the fluid in the first channel (43) is heated by the fourth heat exchanger (52d) and the fifth heat exchanger (52e). This can efficiently raise the temperature of the fluid in the first channel (43).

The first channel (43) includes the outer channel (43a), the intermediate channel (43c), and the inner channel (43b). Each of the outer channel (43a), the intermediate channel (43c), and the inner channel (43b) has an annular horizontal cross section. Each of the outer channel (43a), the intermediate channel (43c), and the inner channel (43b) has a relatively small cross-sectional flow area. This can further accelerate the upward flow.

Further, in the first channel (43), the upward flow in the outer channel (43a), the intermediate channel (43c), and the inner channel (43b) can be kept from flowing between the vertically adjacent heat transfer portions (57, 57) of the fourth heat exchanger (52d) and the fifth heat exchanger (52e). This can reduce a decrease in speed of the upward flow in the first channel (43), and can raise the temperature of the fluid in the first channel (43) more efficiently.

### «Other Embodiments»

The above embodiment may also have the following configurations.

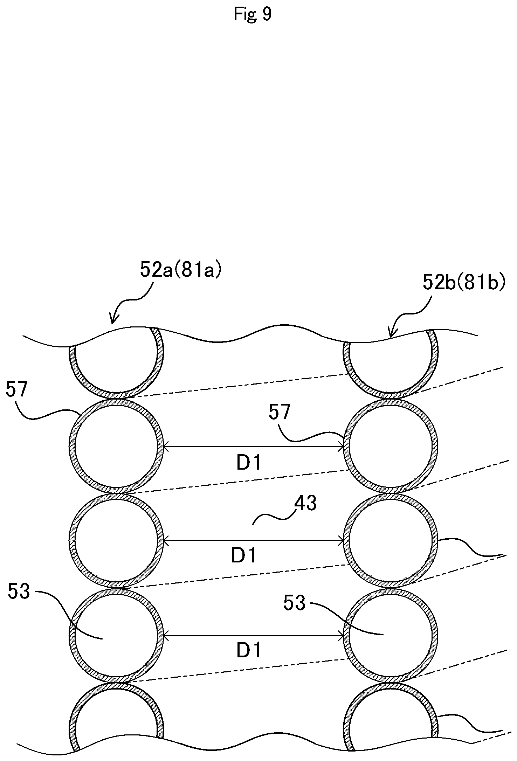

As illustrated in FIG. 9, in the heat transfer tubes (53) as the first heat exchanger (52a) and the second heat exchanger (52b) according to the embodiment, the vertically adjacent heat transfer portions (57, 57) may be in contact with each other. In the heat transfer tubes (53) as the third heat exchanger (52c), the fourth heat exchanger (52d), and the fifth heat exchanger (52e) according to the variations, the vertically adjacent heat transfer portions (57, 57) may be in contact with each other. This configuration can keep the fluid from flowing between the vertically adjacent heat transfer portions (57, 57). Thus, a decrease in speed of the upward flow can be reduced. Moreover, the heat exchanger can be downsized in the vertical direction. This can further widen the upper space (47), and can promote natural convection of the fluid. Further, the helical heat transfer tube (53) can have more turns. This can further increase the contact area between the upward flow of the fluid and the heat transfer tube (53). Thus, heat exchange between the heat transfer tube (53) and the fluid can be promoted.

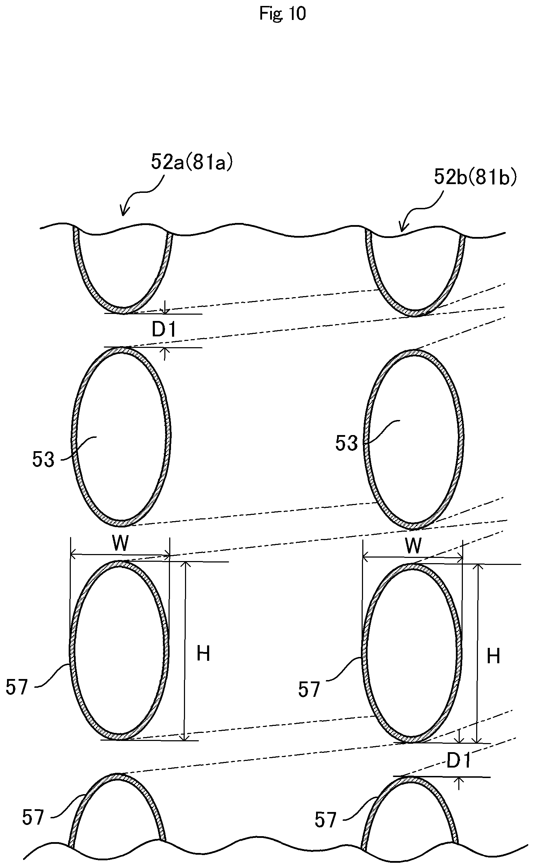

In the heat transfer tube (53) of each of the embodiment and the variations, a vertical length (H) from a lower end to upper end of the heat transfer tube (53) may be greater than a horizontal length (W) between both lateral ends of the heat transfer tube (53) in a cross section perpendicular to the axis of the heat transfer tube (53) as illustrated in FIG. 10. For example, the heat transfer tube (53) may be formed of an elliptical tube or a flat tube. This makes a contact area between the fluid ascending in a space surrounded by the heat transfer tube (53) and the heat transfer tube (53) larger than a contact area between, for example, the fluid and a circular heat transfer tube. As a result, heat exchange between the heat transfer tube (53) and the fluid can be promoted. The resistance to the upward flow in the first channel (43) can be further reduced. Thus, the upward flow can be accelerated, which can promote natural convection in the storage tank (51).

In the embodiment, both of the first partition member (81a) and the second partition member (81b) are constituted of the heat exchangers (52a, 52b). However, one of the first partition member (81a) or the second partition member (81b) may serve as the heat exchanger (52a, 52b), and the other may be formed into a cylindrical partition. Suppose a distance between an adjacent pair of heat transfer portions (57, 57) of one of the heat exchangers (52a, 52b) is referred to as a first distance (D1). A distance between the heat transfer tube (53) of one of the heat exchangers (52a, 52b) and the other partition is referred to as a second distance (D2). Also in this case, the first distance (D1) is preferably shorter than the second distance (D2).

In each of the embodiment and the variations, the heating medium flowing through the heating channel (30) and the heat transfer tube (53) may be a refrigerant or brine.

In each of the embodiment and the variations, the storage tank (51) may be an open storage tank having an open top.

### INDUSTRIAL APPLICABILITY

As can be seen from the foregoing description, the present disclosure is useful for a storage tank unit.

### DESCRIPTION OF REFERENCE CHARACTERS

- 20: Hot Water Supply Apparatus
- 30: Storage Tank
- 43: First Channel
- 44: Second Channel
- 50: Tank Unit
- 51: Storage Tank
- 52a: First Heat Exchanger (Heater)
- 52b: Second Heat Exchanger (Heater)
- 52d: Fourth Heat Exchanger (Heater)
- 52e: Fifth Heat Exchanger (Heater)
- 53: Heat Transfer Tube
- 56: Sidewall
- 57: Heat Transfer Portion
- 59: Inflow Port
- 60: Outflow Port
- 71: Rectifier
- 81a: First Partition Member
- 81b: Second Partition Member
- 82a: First Partition
- 82b: Second Partition
- H: Vertical Length
- W: Horizontal Length
- D1: First Distance
- D2: Second Distance
- D3: Third Distance
- D4: Fourth Distance

## Claims

1. A storage tank unit, comprising:
a storage tank (51) storing fluid; and
a first partition member (81a) arranged in the storage tank (51) and extends along a sidewall (56) of the storage tank (51); and
a second partition member (81b) arranged inside the first partition member (81a) and extends along the sidewall (56) of the storage tank (51), wherein
the first partition member (81a) and the second partition member (81b) are arranged away from a bottom surface of the storage tank (51),
a first channel (43) having an annular horizontal cross section is formed between the first partition member (81a) and the second partition member (81b),
a second channel (44) having an annular horizontal cross section is formed between the first partition member (81a) and an inner surface of the sidewall (56) of the storage tank (51), and
the storage tank unit further includes a heater (52a, 52b, 52d, 52e) configured to heat the fluid in the first channel (43),
wherein
the heater (52a, 52b, 52d, 52e) is a heat exchanger (52a, 52b) having a helical heat transfer tube (53), and each of the first partition member (81a) and the second partition member (81b) serves as the heat exchanger (52a, 52b) having the helical heat transfer tube (53), the storage tank (51) is provided with a water supply pipe (41) to communicate with a water source (S) and a hot water supply pipe (42) to communicate with a hot water supply target (T), with the fluid being water,
**characterized in that**
the heat transfer tube (53) of the first heat exchanger (52a) and the heat transfer tube (53) of the second heat exchanger (52b) respectively have inflow ports (59, 59) and outflow ports (60, 60), wherein the respective inflow ports (59, 59) of the heat transfer tubes (53) of the first heat exchanger (52a) and the heat transfer tubes (53) of the second heat exchanger (52b) are connected to the outlet end of the inflow pipe (31) and wherein the respective outflow ports (60, 60) of the heat transfer tubes (53) of the first heat exchanger (52a) and the heat transfer tubes (53) of the second heat exchanger (52b) are connected to the inlet end of the outflow pipe (32).

2. The storage tank unit of claim 1, wherein
the heat transfer tube (53) includes a plurality of heat transfer portions (57, 57) vertically adjacent to each other, and
a first distance (D1) between a vertically adjacent pair of the heat transfer portions (57, 57) is shorter than a second distance (D2) in a radial direction between the first partition member (81a) and the second partition member (81b).

3. The storage tank unit of claim 1 or 2, wherein
the heat transfer tube (53) includes a plurality of heat transfer portions (57, 57) vertically adjacent to each other, and
the vertically adjacent heat transfer portions (57, 57) are in contact with each other.

4. The storage tank unit of any one of claims 1 to 3, wherein
an inflow port (59) of the heat transfer tube (53) is formed at an upper end of the heat transfer tube (53), and
an outflow port (60) of the heat transfer tube (53) is formed at a lower end of the heat transfer tube (53).

5. The storage tank unit of any one of claims 1 to 4, wherein
in a cross section perpendicular to an axis of the heat transfer tube (53), a vertical length (H) from a lower end to upper end of the heat transfer tube (53) is greater than a horizontal length (W) between both lateral ends of the heat transfer tube (53).

6. The storage tank unit of any one of claims 1 to 5, further comprising:
a rectifier (71) arranged above the first channel (43) and configured to guide the fluid ascending in the first channel (43) toward the center of the storage tank (51).

7. The storage tank unit of any one of claims 1 to 6, wherein
the first partition member (81a), the second partition member (81b), and the heater (52a, 52b, 52d, 52e) are provided only in a bottom portion of the storage tank (51).

8. A hot water supply apparatus (20), comprising
a storage tank unit configured to store fluid, wherein
the storage tank unit is the storage tank unit (50) of any one of claims 1 to 7.

## Patentansprüche

1. Speichertankeinheit, umfassend:
einen Speichertank (51), der ein Fluid speichert; und
ein erstes Teilungselement (81a), das im Speichertank (51) angeordnet ist und sich entlang einer Seitenwand (56) des Speichertanks (51) erstreckt; und
ein zweites Teilungselement (81b), das im Inneren des ersten Teilungselements (81a) angeordnet ist und sich entlang der Seitenwand (56) des Speichertanks (51) erstreckt, wobei
das erste Teilungselement (81a) und das zweite Teilungselement (81b) von einer Bodenfläche des Speichertanks (51) entfernt angeordnet sind,
ein erster Kanal (43), der einen ringförmigen horizontalen Querschnitt aufweist, zwischen dem ersten Teilungselement (81a) und dem zweiten Teilungselement (81b) gebildet ist,
ein zweiter Kanal (44), der einen ringförmigen horizontalen Querschnitt aufweist, zwischen dem ersten Teilungselement (81a) und einer Innenfläche der Seitenwand (56) des Speichertanks (51) gebildet ist, und
die Speichertankeinheit weiter eine Heizung (52a, 52b, 52d, 52e) einschließt, die dazu konfiguriert ist, das Fluid im ersten Kanal (43) zu erwärmen,
wobei
die Heizung (52a, 52b, 52d, 52e) ein Wärmetauscher (52a, 52b) ist, der ein spiralförmiges Wärmeübertragungsrohr (53) aufweist, und wobei sowohl das erste Teilungselement (81a) als auch das zweite Teilungselement (81b) als der Wärmetauscher (52a, 52b), der das spiralförmige Wärmeübertragungsrohr (53) aufweist, dient, der Speichertank (51) mit einer Wasserversorgungsleitung (41) zur Verbindung mit einer Wasserquelle (S) und einer Heißwasserversorgungsleitung (42) zur Verbindung mit einem Heißwasserversorgungsziel (T) bereitgestellt ist, wobei das Fluid Wasser ist,
**dadurch gekennzeichnet, dass**
das Wärmeübertragungsrohr (53) des ersten Wärmetauschers (52a) und das Wärmeübertragungsrohr (53) des zweiten Wärmetauschers (52b) jeweils Zuflussanschlüsse (59, 59) und Ausflussanschlüsse (60, 60) aufweisen, wobei die jeweiligen Zuflussanschlüsse (59, 59) der Wärmeübertragungsrohre (53) des ersten Wärmetauschers (52a) und der Wärmeübertragungsrohre (53) des zweiten Wärmetauschers (52b) mit dem Auslassende der Zuflussleitung (31) verbunden sind, und wobei die jeweiligen Ausflussanschlüsse (60, 60) der Wärmeübertragungsrohre (53) des ersten Wärmetauschers (52a) und der Wärmeübertragungsrohre (53) des zweiten Wärmetauschers (52b) mit dem Einlassende der Ausflussleitung (32) verbunden sind.

2. Speichertankeinheit nach Anspruch 1, wobei
das Wärmeübertragungsrohr (53) eine Vielzahl von Wärmeübertragungsabschnitten (57, 57) einschließt, die vertikal zueinander benachbart sind, und
ein erster Abstand (D1) zwischen einem vertikal benachbarten Paar von Wärmeübertragungsabschnitten (57, 57) kürzer ist als ein zweiter Abstand (D2) in radialer Richtung zwischen dem ersten Teilungselement (81a) und dem zweiten Teilungselement (81b).

3. Speichertankeinheit nach Anspruch 1 oder 2, wobei
das Wärmeübertragungsrohr (53) eine Vielzahl von Wärmeübertragungsabschnitten (57, 57) einschließt, die vertikal zueinander benachbart sind, und
die vertikal benachbarten Wärmeübertragungsabschnitte (57, 57) miteinander in Kontakt stehen.

4. Speichertankeinheit nach einem der Ansprüche 1 bis 3, wobei
ein Zuflussanschluss (59) des Wärmeübertragungsrohrs (53) an einem oberen Ende des Wärmeübertragungsrohrs (53) gebildet ist, und
ein Ausflussanschluss (60) des Wärmeübertragungsrohrs (53) an einem unteren Ende des Wärmeübertragungsrohrs (53) gebildet ist.

5. Speichertankeinheit nach einem der Ansprüche 1 bis 4, wobei
in einem Querschnitt senkrecht zu einer Achse des Wärmeübertragungsrohrs (53) eine vertikale Länge (H) von einem unteren Ende zu einem oberen Ende des Wärmeübertragungsrohrs (53) größer ist als eine horizontale Länge (W) zwischen beiden seitlichen Enden des Wärmeübertragungsrohrs (53).

6. Speichertankeinheit nach einem der Ansprüche 1 bis 5, weiter umfassend:
einen Gleichrichter (71), der über dem ersten Kanal (43) angeordnet und dazu konfiguriert ist, das im ersten Kanal (43) aufsteigende Fluid in Richtung zur Mitte des Speichertanks (51) zu führen.

7. Speichertankeinheit nach einem der Ansprüche 1 bis 6, wobei
das erste Teilungselement (81a), das zweite Teilungselement (81b) und die Heizung (52a, 52b, 52d, 52e) nur in einem Bodenabschnitt des Speichertanks (51) bereitgestellt sind.

8. Heißwasserversorgungseinrichtung (20), umfassend
eine Speichertankeinheit, die dazu konfiguriert ist, Fluid zu speichern, wobei
die Speichertankeinheit die Speichertankeinheit (50) nach einem der Ansprüche 1 bis 7 ist.

## Revendications

1. Unité de réservoir de stockage, comprenant :
un réservoir de stockage (51) stockant un fluide ; et
un premier élément de séparation (81a) agencé dans le réservoir de stockage (51) et s'étendant le long d'une paroi latérale (56) du réservoir de stockage (51) ; et
un second élément de séparation (81b) agencé à l'intérieur du premier élément de séparation (81a) et s'étendant le long de la paroi latérale (56) du réservoir de stockage (51), dans laquelle
le premier élément de séparation (81a) et le second élément de séparation (81b) sont agencés loin d'une surface de fond du réservoir de stockage (51),
un premier canal (43) présentant une section transversale horizontale annulaire est formé entre le premier élément de séparation (81a) et le second élément de séparation (81b),
un second canal (44) présentant une section transversale horizontale annulaire est formé entre le premier élément de séparation (81a) et une surface interne de la paroi latérale (56) du réservoir de stockage (51), et
l'unité de réservoir de stockage inclut en outre un élément chauffant (52a, 52b, 52d, 52e) configuré pour chauffer le fluide dans le premier canal (43),
dans laquelle
l'élément chauffant (52a, 52b, 52d, 52e) est un échangeur de chaleur (52a, 52b) présentant un tube hélicoïdal (53) de transfert de chaleur, et chacun du premier élément de séparation (81a) et du second élément de séparation (81b) sert d'échangeur de chaleur (52a, 52b) présentant le tube hélicoïdal (53) de transfert de chaleur, le réservoir de stockage (51) est pourvu d'un tuyau (41) d'alimentation en eau pour communiquer avec une source (S) d'eau et d'un tuyau (42) d'alimentation en eau chaude pour communiquer avec une cible (T) d'alimentation en eau chaude, le fluide étant de l'eau,
**caractérisée en ce que**
le tube (53) de transfert de chaleur du premier échangeur de chaleur (52a) et le tube (53) de transfert de chaleur du second échangeur de chaleur (52b) présentent respectivement des orifices d'écoulement entrant (59, 59) et des orifices d'écoulement sortant (60, 60), dans laquelle les orifices d'écoulement entrant (59, 59) respectifs des tubes (53) de transfert de chaleur du premier échangeur de chaleur (52a) et des tubes (53) de transfert de chaleur du second échangeur de chaleur (52b) sont raccordés à l'extrémité de sortie du tuyau d'écoulement entrant (31) et dans laquelle les orifices d'écoulement sortant (60, 60) respectifs des tubes (53) de transfert de chaleur du premier échangeur de chaleur (52a) et des tubes (53) de transfert de chaleur du second échangeur de chaleur (52b) sont raccordés à l'extrémité d'entrée du tuyau d'écoulement sortant (32).

2. Unité de réservoir de stockage selon la revendication 1, dans laquelle
le tube (53) de transfert de chaleur inclut une pluralité de parties de transfert de chaleur (57, 57) verticalement adjacentes les unes aux autres, et
une première distance (D1) entre une paire verticalement adjacente des parties de transfert de chaleur (57, 57) est plus courte qu'une seconde distance (D2) dans une direction radiale entre le premier élément de séparation (81a) et le second élément de séparation (81b).

3. Unité de réservoir de stockage selon la revendication 1 ou la revendication 2, dans laquelle
le tube (53) de transfert de chaleur inclut une pluralité de parties de transfert de chaleur (57, 57) verticalement adjacentes les unes aux autres, et
les parties de transfert de chaleur (57, 57) verticalement adjacentes sont en contact les unes avec les autres.

4. Unité de réservoir de stockage selon l'une quelconque des revendications 1 à 3, dans laquelle
un orifice d'écoulement entrant (59) du tube (53) de transfert de chaleur est formé au niveau d'une extrémité supérieure du tube (53) de transfert de chaleur, et
un orifice d'écoulement sortant (60) du tube (53) de transfert de chaleur est formé au niveau d'une extrémité inférieure du tube (53) de transfert de chaleur.

5. Unité de réservoir de stockage selon l'une quelconque des revendications 1 à 4, dans laquelle
dans une section transversale perpendiculaire à un axe du tube (53) de transfert de chaleur, une longueur verticale (H) d'une extrémité inférieure à une extrémité supérieure du tube (53) de transfert de chaleur est plus grande qu'une longueur horizontale (W) entre les deux extrémités latérales du tube (53) de transfert de chaleur.

6. Unité de réservoir de stockage selon l'une quelconque des revendications 1 à 5, comprenant en outre :
un redresseur (71) agencé au-dessus du premier canal (43) et configuré pour guider le fluide montant dans le premier canal (43) vers le centre du réservoir de stockage (51).

7. Unité de réservoir de stockage selon l'une quelconque des revendications 1 à 6, dans laquelle
le premier élément de séparation (81a), le second élément de séparation (81b) et l'élément chauffant (52a, 52b, 52d, 52e) sont disposés uniquement dans une partie fond du réservoir de stockage (51).

8. Appareil (20) d'alimentation en eau chaude, comprenant
une unité de réservoir de stockage configurée pour stocker un fluide, dans lequel
l'unité de réservoir de stockage est l'unité (50) de réservoir de stockage selon l'une quelconque des revendications 1 à 7.
